# EUROPEAN PATENT APPLICATION

(11) **EP 1 389 023 A1**
(43) Date of publication of application: **11.02.2004**
(21) Application number: 02360232.9
(22) Date of filing: 05.08.2002
(51) Int. Cl.: H04Q 7/22

(54) **Method for providing location information from a mobile device to a group of mobile devices**

(71) Applicant: ALCATEL, 75008 Paris (FR)
(72) Inventor: Merheb, Patrick, 92800 Puteaux (FR)
(74) Representative: Urlichs, Stefan, Dipl.-Phys.

(57) **Abstract**

The invention relates to a method for providing location information from a mobile device (101) to a group of mobile devices (102, 103), said method comprising the steps of generating a message according to an instant messaging protocol, said message comprising presence information related to said mobile device (101),

According to the invention, an indication related to the location of said mobile device (101) is included in said message.

## Description

### BACKGROUND OF THE INVENTION

The present invention relates to network applications in a wireless communication network and more precisely to a method for informing terminals under the range of a wireless communication network on the position of other terminals in their environment.

Known in the art are instant messaging systems which are used in the Internet world for signalizing the presence of users defined as belonging to a community of users to other users belonging to this community. A presence flag is displayed on the user terminal to indicate if the users of the community are ready to receive instant messages. An instant messaging protocol carrying presence information and called Common Presence and Instant Messaging Protocol (CPIM) has for example been standardized at the Internet Engineering Task Force (IETF).

Instant messaging systems are already existing in the mobile phone industry for example in form of mobile originating and mobile terminating short messaging.

The Wireless Village initiative also deals with such topics and has proposed to introduce instant messaging and presence services in the mobile internet society.

The current trend is to include more and more pure internet applications in telecommunication networks and especially in wireless communication networks what gets possible thank to the always-on capabilities of GPRS and UMTS radio communication networks.

Using instant messaging with presence services enables it to keep track of the online status and availability of the communication partners.

This solution presents however the drawback that the presence (ready or busy status of a user) is usually not a sufficient information for mobile users. Indeed, usually mobile users use their mobile to help defining meeting points where the mobile users have to meet physically. For this purpose they call each other using a voice channel to check if one of the expected attendee is on the right way or to guide him orally to the meeting point. This presents the drawback to busy a voice channel for this service.

A particular object of the present invention is to provide a method for mitigating the previously listed drawbacks.

### SUMMARY OF THE INVENTION

These objects, and others that appear below, are achieved by a method for providing location information from a mobile device to a group of mobile devices according to claim 1, a mobile device according to claim 5, and an instant messaging server according to claim 6.

According to the present invention, an instant messaging protocol already furnishing presence information of a mobile device is adapted to further provide location information of this mobile device to the other mobile devices of his community

The method according to the present invention presents the advantage that the combination of location information with presence information provides an easy filtering of location information according to security and privacy policies as those already defined for presence information.

Another advantage of the present invention is that there is no need for an instant messaging server to collect continuously the location of the different users.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a system comprising mobile devices belonging to a community of mobile devices where the method according to the present invention is implemented;
- Figure 2 shows the data format used in the instant messaging protocol according to the present invention;
- Figure 3 shows the internal structure of a mobile device according to the present invention;
- Figure 4 shows the internal structure of an instant messaging server according to the present invention.

### DETAILED DESCRIPTION OF THE INVENTION

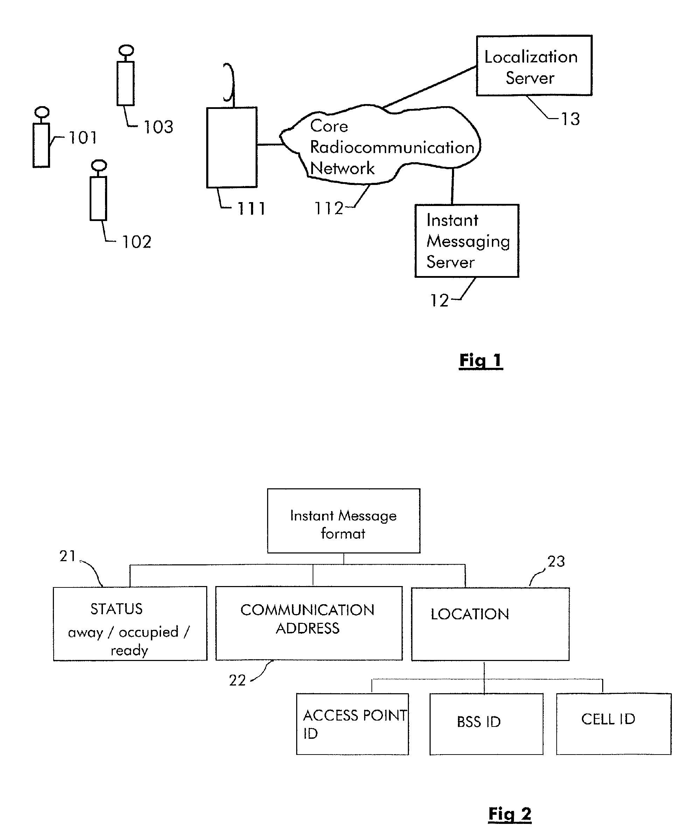

Figure 1 shows a system comprising mobile devices 101,..., 103 belonging to a community of users where the method according to the present invention is implemented. The system further comprises a wireless communication network preferably supporting packet oriented traffic for example as GPRS (General Packet Radio Service) or UMTS (Universal Mobile Telecommunications System) networks. The wireless communication network comprises base stations 111 in the access part of the network and a core network 112. An instant messaging server 12 according to the present invention and preferably a location server 13 connectable to the wireless communication network are also part of the system.

The instant messaging server 12 as well as the location server 13 are preferably connectable to the lP backbone of the wireless communication network using the IP communication protocol to communicate together or with mobile devices 101, ..., 103.

Instant messaging with presence information applications are supported by the system in that each mobile device 101, ..., 103 may belong to a community of mobile devices which will be alerted on the status the other mobile devices of the community and will be able to send instant messages to other mobile devices belonging to the community.

The instant messaging application is realized in that each mobile device 101, ..., 103 comprise a client application which can use the lP transport service of the wireless communication network to contact instant messaging server 12.

When a mobile device wants to inform the other mobile devices of his community on his presence, the client part of the instant messaging application builds an appropriate message and addresses it to the instant messaging server 12 using the IP transport service of the wireless communication network. The IP address of the instant messaging server is known at the client application. The message has preferably the format defined in the IETF RFC 2778 " A model for presence and instant messaging".

Upon reception of this message at instant messaging server 12, the latter checks the identity of all mobile devices belonging to the community the sender 101 of the received message belongs to, generates and sends messages to these mobile devices 102, 103 informing them that mobile device 101 is now available for receiving instant messaging and giving his current location.

According to one embodiment of the present invention, when mobile device 101 wants to inform the other mobile devices belonging to his community on his presence, the instant messaging application adds a field comprising information on the location of mobile device 101 in the message as defined above.

For this purpose the mobile device 101 has to know his position. This is preferably the case if mobile device 101 is equipped with a GPS receiver. This is also the case if the mobile device receive information from the wireless communication network which enables it to determine his position.

According to another embodiment of the present invention, upon reception of a message with presence information received from mobile device 101 as defined above but containing no location information in the predefined corresponding field, instant messaging server 13 will determine the location of mobile device 101 preferably by interrogating a location server 13.

Location server 13 is reached over the wireless communication network by sending a request using the IP transport service of the wireless communication network. Location server 13 performs an estimation of the position of mobile device 101 according to one of the methods well known from persons skilled in the art and which will not be further detailed in this description.

Upon response from the location server 13, instant messaging server generates a message comprising additionally to the presence information location information of user 101 and sends it to the other mobile devices 102, 103 belonging to the community of mobile device 101.

The client instant messaging applications on the other mobile devices 102, 103 display the information on the presence status of mobile device 101 together with his location. As a consequence, the other mobile devices 102, 103 are informed on the location of mobile device 101 without disturbing mobile device 101 and without busying a voice channel to call and ask him about his location.

Figure 2 shows the data format used in the instant messaging protocol according to the present invention.

In the embodiment of the invention where mobile device 101 indicates his location, this data format is used between mobile device 101 and instant messaging server 12as well as between instant messaging server 12 and the mobile devices 102, 103 belonging to the community of mobile device 101.

In the embodiment where the location of mobile device 101 is determined at instant messaging server 13, the format described in figure 2 is only relevantly used between instant messaging server and the mobile devices belonging to the community of mobile device 101.

The data format of the message comprises a field 21 corresponding to the status of mobile device 101 (e.g. busy, away, ready) indicating if mobile device 101 can be reached by the mobile devices 102, 103 of his community over instant messaging

Moreover, the message comprises a field 22 indicating the communication address of mobile device 101.

According to the present invention, the message further comprises a field 23 indicating the location of the mobile device 101.

The location information in field 23 may be included in the message in form of a cell identifier, resp. a BSS identifier, resp an access point identifier indicating in which cell, resp. which BSS, resp. which access point of the wireless communication network the mobile device 101 is located in. This provides a low accuracy.

Alternatively, the location information in field 23 may correspond to the geographical coordinates of mobile device 101. This solution much more accurate will be preferred when mobile device 101 is equipped with a GPS receiver.

Alternatively, the location information in field 23 may be a logical information, such as a postal code, a street address, a building name... This alternative requires the use of geocoding functions which translate the user's geographical "x,y" position into such a logical information. Location server 13 contacts a GIS (Geographic information System) for operating this translation. It will be clear for a person skilled in the art that instant messaging server 12 itself may start the request for translation directly at the GIS without requiring the intervention of location server 13 provided an interface is available between the instant messaging sever 12 and the GIS.

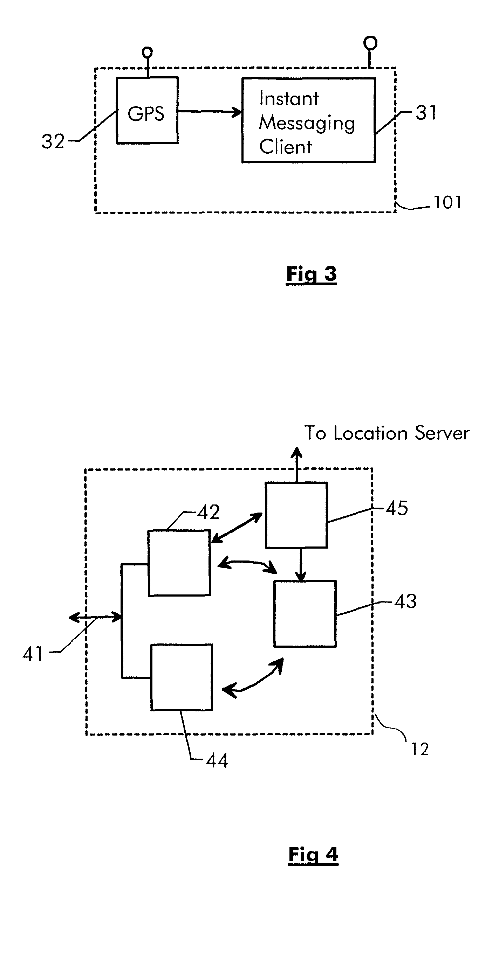

Figure 3 shows the internal structure of a mobile device 101 according to the present invention. Mobile device 101 comprises an instant messaging client application compatible with a server application stored on instant messaging server 13. The instant messaging client application comprises a software module 31 for generating a message according to an instant messaging protocol with presence information preferably according to the IETF RFC 2778 and additionally including an information on the location of mobile device 101 in the message.

Preferably, mobile device 101 comprises a GPS receiver 32 connected to software module 31. GPS receiver 32 provides location information of mobile device 101 to software module 31 for generating a message.

In another embodiment of the invention, no GPS module is required if mobile device 101 receives a location indication from the wireless communication network in the form of a cell, BSS or access point identifier.

Figure 4 shows the internal structure of an instant messaging server 12 according to the present invention.

Instant messaging server 12 comprises an interface 41 to a wireless communication network, a module 42 for receiving instant messages according to the present invention, a user community controller 43, a module for transmitting messages according to the present invention 44 and optionally a location module 45.

Instant messages are received over interface 41 and submitted to module 42 for receiving instant messages. Module 42 checks the format of the received instant message.

If a location field 23 indicating the location of the sending mobile device is not filled in with dummy information, this information is extracted from the message and stored at community controller 43.

Preferably, community controller 43 checks if the location has changed compared to the already stored location and if it is the case triggers module 44 for transmitting instant messages to all mobile devices registered in community controller 43 as belonging to the community of the sending mobile device. Module 44 generates then a message comprising the location information submitted by the sending mobile device preferably together with a presence information and sends it to the appropriate recipients.

If no location information is available in the instant message received from the sending mobile device, module 42 for receiving instant messages triggers location module 45. Location module 45 sends a location request to a preferably external location server itself possibly connected to a Geographical Information system. The location request comprises an identifier univocally identifying the sending mobile device. The location procedure will not be further detailed here since it is not part of the present invention.

Upon answer from the location server, location module 45 stores the received location in the community control module 43 in relation with the identifier of the sending mobile device. Community controller checks if the location has changed compared to the already stored location and if it is the case triggers module 44 for transmitting instant messages to all mobile devices registered in community controller 43 as belonging to the community of the sending mobile device. Module 44 generates then a message comprising the location information submitted by the sending mobile device preferably together with a presence information and sends it to the appropriate recipients.

## Claims

1. Method for providing location information from a mobile device (101) to a group of mobile devices (102, 103), said method comprising the steps of generating a message according to an instant messaging protocol, said message comprising presence information related to said mobile device (101), said method being **characterized in that** said message further comprises an indication related to the location of said mobile device (101).

2. Method according to claim 1, **characterized in that** said indication related to the location is obtained by sending a request to a location server (13) belonging to a wireless communication network (111, 112) under the coverage of which said mobile device (101) is located.

3. Method according to claim 1, **characterized in that** said indication related to the location is obtained upon interrogation of a GPS receiver (32) included in said mobile device (101).

4. Method according to claim 1, **characterized in that** it further comprises the step of:
interacting with a Geographic Information System (GIS) for obtaining logical location information of said mobile device (101).

5. Mobile device (101) able to communicate with a group of mobile devices (102, 103) by supporting an instant messaging client application (31) comprising means for generating a message comprising presence information of said mobile device (101), said instant messaging client application being **characterized in that** it comprises means for encapsulating in said message an indication related to the location of said mobile device (101).

6. Instant messaging server (12) for providing a group of mobile devices (101, ..., 103) with information on at least one mobile device (101) belonging to said group, said server (12) comprising an instant messaging application able to send a message comprising presence information related to said at least one mobile device (101) to said group of mobile devices (102, 103), said instant messaging server (12) being **characterized in that** it further comprises :
- means for receiving location information related to said mobile device (101);
- means for including location information related to said mobile device (101) in predefined field of said message destined to said group (102, 103).

7. Instant messaging server (12) according to claim 6, further comprising means for sending a request to a location server (13) by using the IP transport capability of a wireless communication network (112).
